# EUROPEAN PATENT SPECIFICATION

(11) **EP 3 510 288 B1**
(45) Date of publication and mention of the grant of the patent: **01.11.2023**
(21) Application number: 17767884.4
(22) Date of filing: 06.09.2017
(51) Int. Cl.: F04D 19/04, F04D 29/059, F04D 29/063, F16C 33/66, F16C 19/06, F16C 35/077

(54) **TURBOMOLECULAR PUMP LUBRICANT SUPPLY SYSTEMS**
SCHMIERMITTELVERSORGUNGSSYSTEME FÜR TURBOMOLEKULARE PUMPE
SYSTÈMES D'ALIMENTATION DE LUBRIFIANT DESTINÉS À UNE POMPE TURBOMOLÉCULAIRE

(30) Priority: 07.09.2016 GB 201615204
(43) Date of publication of application: 17.07.2019
(73) Proprietor: Edwards Limited, Burgess Hill, Sussex RH15 9TW (GB)
(72) Inventor: MILNER, Paul, Burgess Hill Sussex RH15 9TW (GB); LUCCHETTA, Emiliano, Burgess Hill Sussex RH15 9TW (GB)
(74) Representative: Norton, Ian Andrew
(86) International application number: PCT/GB2017/052595
(87) International publication number: WO 2018/046912

(56) References cited:
- EP-A2- 2 557 316
- WO-A1-2006/131694
- US-A1- 2008 112 660

## Description

### Field of the Invention

The invention relates to turbomolecular pump lubricant supply systems.

### Background to the Invention

Turbomolecular pumps comprise a rotor comprising a plurality of discs mounted on a rotor shaft for rotation relative to a plurality of stator discs disposed in interleaving relationship with the rotor discs. The rotor shaft is supported by a bearing arrangement that may comprise two bearings located at or intermediate respective ends of the shaft. The upper bearing may be in the form of a magnetic bearing and the lower bearing is typically a rolling bearing.

A typical rolling bearing comprises an inner race fixed relative to the rotor shaft, an outer race and a plurality of rolling elements located between the races for allowing relative rotation of the inner race and the outer race. To prevent mutual contact between the rolling elements they are often guided and evenly spaced by a cage. Adequate lubrication is essential to ensure accurate and reliable operation of rolling bearings. The main purpose of the lubricant is to establish a load-carrying film to separate the bearing components in rolling and sliding contact in order to minimise friction and wear. Other purposes include the prevention of oxidation or corrosion of the bearing components, the formation of a barrier to contaminants and the transfer of heat away from the bearing components. The lubricant is generally in the form of either oil or grease (a mixture of oil and a thickening agent).

Turbomolecular pumps using oil-lubricated bearings require an oil feed system to feed oil between the contact areas of the bearing. This enables the oil to perform cooling as well as lubrication and thereby permits the bearings to run at a faster speed. Turbomolecular pumps have traditionally used a wicking system for supplying oil to a rolling bearing. In such a system, a felt wick supplied by an oil reservoir feeds oil to a conical "oil feed" nut mounted on the shaft. When the shaft rotates, oil travels along the conical surface of the nut to the bearing. The oil then passes through the bearing and is returned to the reservoir under the influence of gravity. Turbomolecular pumps with such an oil feed system are disclosed for example in WO 2006/131694 A1, EP 2 557 316 A2 or US 2008/0112660 A1.

The oil reservoir from which the felt wick is supplied may comprise two stacks comprising layers of felt that lay against respective major surfaces of the felt wick so that the felt wick is sandwiched between the two stacks.

The feed rate of oil to the bearing may be affected by a number of factors, including the taper angle of the conical nut, the rate of transfer of oil from the wick to the nut, the surface finish of the conical surface of the nut, temperature and the speed of rotation of the shaft.

### Summary of the Invention

The invention provides a turbomolecular pump as specified in claim 1.

### Brief Description of the Drawings

In the following disclosure, reference will be made to the drawings, in which:
Figure 1 is a schematic representation of an example of a turbomolecular pump;
Figure 2 is a section through a bearing and lubricant supply system of the turbomolecular pump of Figure 1;
Figure 3 is an enlargement of a portion of Figure 2;
Figure 4 is a perspective view from one end of a resilient bearing support of the turbomolecular pump of Figure 1; and
Figure 5 is a perspective view from the opposite end of the resilient bearing support.

### Detailed Description

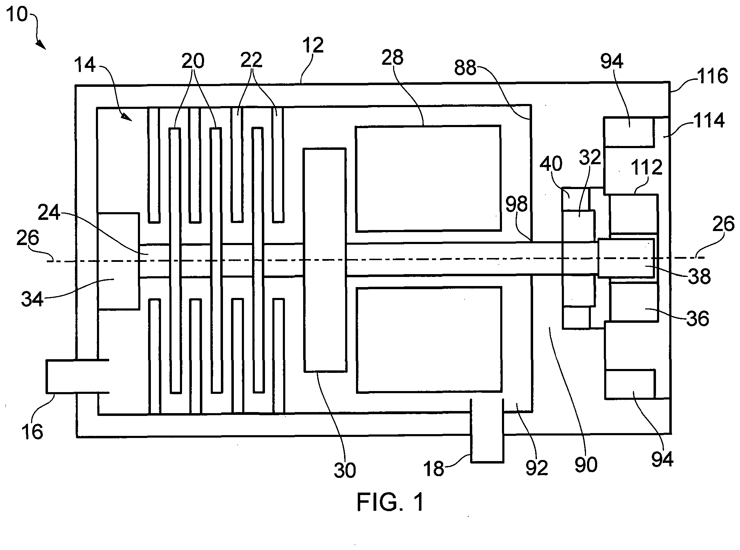

Referring to Figure 1, a turbomolecular pump 10 comprises a housing, or casing, 12, a pumping mechanism 14 disposed in the housing, an inlet 16 and an outlet 18. The pumping mechanism 14 comprises a turbomolecular pumping mechanism comprising a plurality of rotor blades 20 disposed in interleaving relationship with a plurality of stator discs 22. The rotor blades 20 are mounted on, or integral with, a rotor shaft 24 that has a longitudinal axis (axis of rotation) 26. The rotor shaft 24 is driven to rotate about the axis of rotation 26 by a motor 28. The pumping mechanism 14 may additionally comprise a molecular drag pumping mechanism 30, which may be a Gaede mechanism, a Holweck mechanism or a Siegbahn mechanism. There may be additional, or alternative, mechanisms downstream of the molecular drag pumping mechanism such as an aerodynamic pumping mechanism comprising a regenerative mechanism.

The rotor shaft 24 is supported by a plurality of bearings 32, 34. The plurality of bearings may comprise two bearings 32, 34 positioned at, or adjacent, respective ends of the rotor shaft 24 as shown, or alternatively, intermediate the ends. In the example illustrated by Figure 1, a rolling bearing 32 supports a first end portion of the rotor shaft 24 and a magnetic bearing 34 supports a second end portion of the rotor shaft 24. A second rolling bearing may be used as an alternative to the magnetic bearing 34. When a magnetic bearing 34 is used, a back-up rolling bearing (not shown) may optionally be provided.

The turbomolecular pump 10 additionally comprises a lubricant supply system 36 and a lubricant transfer device 38 provided on the rotor shaft 24 to transfer lubricant from the lubricant supply system to the rolling bearing 32

Referring to Figures 1 to 3, the rolling bearing 32 is disposed between the first end portion of the rotor shaft 24 and a resilient bearing support 40 via which the rolling bearing 32 is mounted to the housing 12. The rolling bearing 32 comprises an inner race 44 fixed relative to the rotor shaft 24, an outer race 46 fixed relative to the resilient bearing support 40, a plurality of rolling elements 48 disposed between the inner and outer races and a cage 50 that is configured to provide a desired spacing between the rolling elements. The rolling bearing 32 is configured to allow relative rotation of the inner and outer races 44, 46 so that it can support the rotor shaft 24 during rotation of the rotor shaft relative to the housing 12.

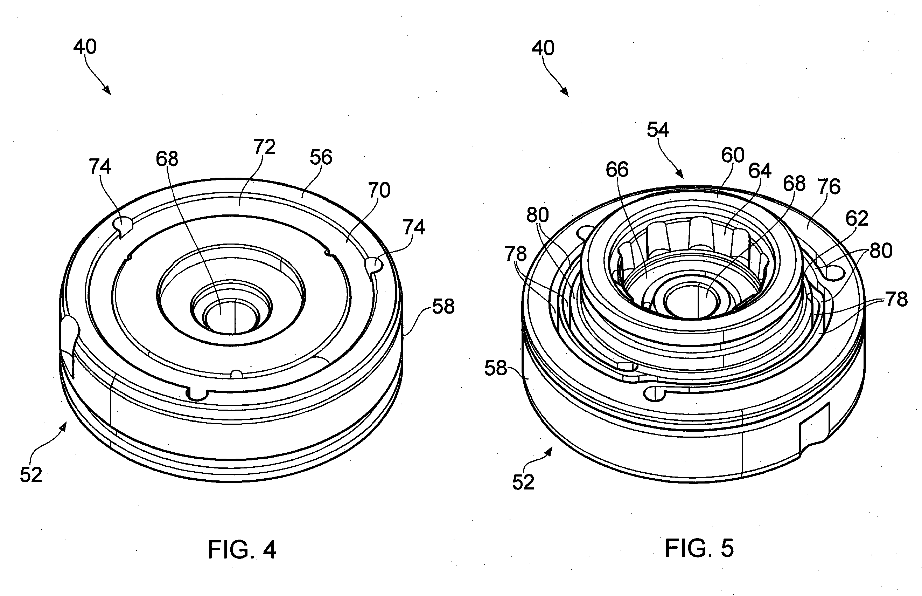

Referring to Figures 4 and 5, the resilient bearing support 40 comprises a stepped cylindrical body 52, 54. The first, larger diameter, portion 52 of the cylindrical body has a free, or outer, end 56 and an outer side wall 58. The second, smaller diameter, portion 54 of the cylindrical body has a free, or outer, end 60 and an outer side wall 62. The resilient bearing support 40 has a recess 64 extending from the free end 60 of the second cylindrical portion 54 to a transverse, or base, wall 66 and a through-bore 68 extending from the free end 56 of the first cylindrical portion 52 to the base wall 66 to provide a through-passage extending between the free ends 56, 60.

The free end 56 of the first portion 52 of the cylindrical body defines an annular groove 70, which houses a sealing element 72. The sealing element 72 may be an elastomeric O-ring. The free end 56 is additionally provided with a plurality of recesses 74 that are contiguous with the groove 70. Although not limited to this number, the illustrated example has three recesses 74. The recesses 74 may be equi-spaced about the groove 70 and in the illustrated example are provided at the outer periphery of the groove.

An annular face 76 is defined at the end of the first portion 52 of the cylindrical body that meets the second portion 54. The annular face 76 may be disposed at least substantially parallel to the free ends 56, 60 and at least substantially perpendicular to the outer side walls 58, 62. The resilient bearing support 40 comprises a plurality of slots 78 defined in the first cylindrical portion 52. In the axial direction of the resilient bearing support 40, the slots 78 extend from the annular face 76 of the first cylindrical portion 52 to the base of the groove 70. In their lengthways direction the slots 78 extend partially circumferentially about the first cylindrical portion 52. The slots 78 define a plurality of integral flexible members 80 that extend partially circumferentially about the first cylindrical portion 52. The flexible members 80 act like leaf springs allowing relative axial and radial movement between central and peripheral portions of the first cylindrical portion 52.

Although not essential, the resilient bearing support 40 may be made of a metallic material, such as aluminium, an aluminium alloy, tempered steel, beryllium copper, phosphor bronze, titanium, a titanium alloy. The stiffness of the resilient bearing support 40 is determined by the geometry of the slots 78 and, thus, the geometry of the flexible members 80 and can be accurately determined using finite element analysis. The resilient bearing support 40 may be configured to have a relatively low radial stiffness, for example in the range 50 to 500 N/mm. The axial stiffness of the resilient bearing support 40 may be somewhat greater than the radial stiffness.

The rolling bearing 32 is supplied with a lubricant from the lubricant supply system 36 to establish a load-carrying film that separates the rolling elements 48 from the inner and outer races 44, 46 to minimise friction and wear. The lubricant is liquid and may be an oil.

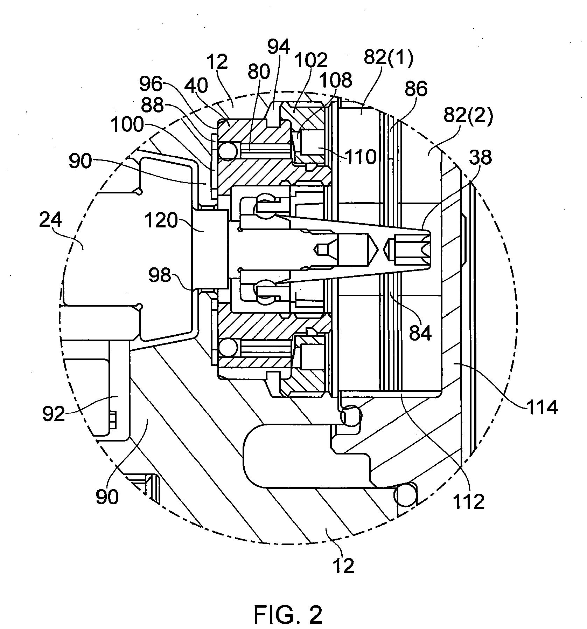

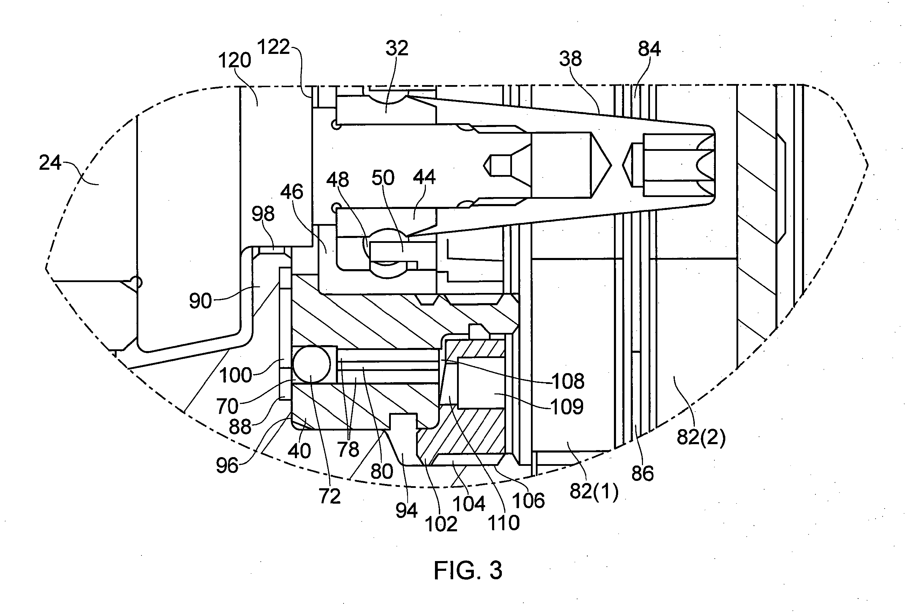

Referring to Figures 2 and 3, the lubricant supply system 36 comprises a lubricant reservoir body 82(1), 82(2) and a finger 84 projecting inwardly of the lubricant reservoir body to engage the lubricant transfer device 38 to transfer lubricant from the lubricant reservoir body to the lubricant transfer device. The lubricant reservoir body may comprise separate body portions 82(1), 84(2) and the finger 84 may project generally radially inwardly from the inner periphery of annular body 86 that is sandwiched between the body portions with its opposite major faces engaging respective opposed ends of the body portions. Prior to fitting to the turbomolecular pump 10, the finger 84 may extend generally in the plane of the body member 86. To ensure engagement with the lubricant transfer device 38, the finger 84 may be sized so that it deflects out of the plane of the body member 86 when engaging the lubricant transfer device.

The lubricant reservoir body 82(1), 82(2), finger 84 and body member 86 may be made of a stable fibrous material or materials that are able to conduct lubricant by a capillary or wicking action. The fibrous material may be natural or synthetic and in some examples may be a felt material. The lubricant reservoir body 82(1), 82(2), finger 84 and body member 86 may be made of the same fibrous material, although in some examples different fibrous materials may be used. Although not essential, one or both body portions 82(1), 82(2) of the lubricant reservoir body may comprise a plurality of relatively thin layers of fibrous material stacked one upon another.

The lubricant supply system 36 may further comprise a lubricant collection passage 88 that is configured to receive lubricant that has been supplied to the rolling bearing 32 via the lubricant transfer device 38 and then passed through the bearing. The lubricant collection passage 88 may be defined in a transverse wall 90 of the housing 12 that is disposed between a chamber 92 that houses the pumping mechanisms 14, 30 and the motor 28 and a chamber 94 that houses the rolling bearing 32 and resilient bearing support 40. The lubricant collection passage 88 may be defined in a face 96 of the wall 90 against which the free end 56 of the resilient bearing support 40 abuts. The wall 90 is provided with a through-hole 98 through which the rotor shaft 24 extends. The lubrication collection passage 88 may be an annular channel that extends about and is spaced from the rotor shaft 24 and through-hole 98. With respect to the axis of rotation 26, the lubricant collection passage 88 may be disposed radially outwardly of the through-hole 98.

Referring to Figure 3 a plurality of support elements 100 are be provided in the lubricant collection passage 88. The support elements 100 are configured such that their free ends are disposed in the plane of the face 96 so that the free end 56 of the resilient bearing support 40 abuts both the face 96 and the support elements 100 so that the face 96 and support elements 100 limit axial flexure of the resilient bearing support in the direction of the pumping mechanisms 14, 30 and the bearing 34.

As best seen in Figure 3, the resilient bearing support 40 may be secured in the chamber 94 by a rotatable securing element 102. The rotatable securing element 102 may comprise an annular body provided with external threading 104 engagable with threading 106 provided on the housing 12. The rotatable securing element 102 may define a flowpath 108-110 for lubricant. The lubricant flowpath may comprise an elongate channel 108 provided in the face of the rotatable securing element 102 that bears against the resilient bearing support 40, an elongate channel 109 provided in the opposite face of the rotatable securing element and at least one bore 110 connecting the two elongate channels. The elongate channels 108, 109 may be annular channels. In the illustrated example, there is a plurality of bores 110 defining a corresponding number of flowpaths. In some examples, the bores 110 may extend at least substantially parallel to the axis of rotation 26 of the rotor shaft 24. The rotatable securing element 102 may comprise a recess sized to receive the end of the first cylindrical body portion 52 that joins the second cylindrical body portion 54.

The lubricant transfer device 38 may be a conical sleeve secured to the rotor shaft 24. The lubricant transfer device 38 has an outer surface that tapers radially outwardly as it approaches the rolling bearing 32. The rotor shaft 24 and lubricant transfer device 38 may be provided with male and female threads respectively to enable the lubricant transfer device to be screwed onto the rotor shaft in the manner of a nut. Alternatively, the lubricant transfer device 38 may simply slide onto the rotor shaft 24 and be secured to the rotor shaft by means of a nut, bolt, screw or other suitable securing means. In some examples, the lubricant transfer device 38 may be used to clamp the rolling bearing 32 to the resilient bearing support 40.

Referring to Figures 1 and 2, the lubricant reservoir body 82(1), 82(2), finger 84 and body member 86 may be received in a recess 112 provided at an end of the housing 12. The recess 112 may be provided on an end plate 114 that is secured to an end 116 of the housing 12 by, for example, bolts or screws (not shown) screwed into threaded apertures provided in the housing. In other examples, the lubricant reservoir body 82(1), 82(2), finger 84 and body member 86 may be fitted to a recess defined by the housing 12 or in a liner, or cartridge, that may be fitted to the housing.

As best seen in Figure 3, the shaft 24 may comprise a taper portion 120 that is disposed between the wall 90 and the rolling bearing 32. The taper portion 120 increases in diameter towards the rolling bearing 32. The taper portion 120 may be an integral part of the rotor shaft 24 or, for example, or part of a collar secured to the rotor shaft. The tape portion 120 may have an end face 122 disposed adjacent the end of the rolling bearing 32 that engages the base wall 66 of the resilient bearing support 40.

Although not limited to such usage, in Figures 1 to 3 the turbomolecular pump 10 is shown in a non-upright condition in which the rotor shaft 24 is disposed at approximately 90° to the vertical so that the pump is disposed generally horizontally. Although typically the turbomolecular pump 10 may be mounted such that the rotor shaft 24 extends at least substantially vertically, there may be applications that require that the pump is mounted such that the rotor shaft is inclined to the vertical, for example, at angles between 10 and 90° to the vertical. If the turbomolecular pump 10 is mounted in such orientations, especially if the rotor shaft if inclined at angles of between 45 and 90° to the vertical, there is a risk that lubricant will pass through the through-hole 98 into the chamber 92.

Referring to Figure 3, in operation when the rotor shaft 24 rotates about the axis of rotation 26, lubricant transferred to the lubricant transfer device 38 via the finger 84 is moved along the tapered outer surface of the lubricant transfer device and into the rolling bearing 32. Lubricant that passes through the rolling bearing 32 impinges on the end face 122 of the taper portion 120, which acts as a deflector, or flinger, and deflects, or flings, the lubricant towards the lubricant collection channel 88. The lubricant collected in the lubricant collection channel 88 may flow into the lubricant through-passage, or passages, defined by the slots 78 in the resilient bearing support 40 and on along the flowpath 108, 110 via which it is returned to the lubricant reservoir body 82(1), 82(2). Thus, lubricant supplied to the rolling bearing 32 can be effectively returned to the lubricant reservoir body 82(1), 82(2) for recirculation. Thus, lubricant that has passed through the rolling bearing 32 that might pool in the space between the rolling bearing and the wall 90 and flow into the chamber 92 via the through-hole 98 instead flows into the lubricant collection passage 88 for return to the lubricant reservoir body 82(1), 82(2). Also, lubricant exiting the rolling bearing 32 is at least substantially prevented from flowing along the rotor shaft 24 into the chamber 92 since the taper portion 120 may catch the lubricant and deflect, or fling, it away from the through-hole 98 towards the lubricant collection passage 88. Thus, the turbomolecular pump 10 can be mounted and used in non-upright orientations with the risk of lubricant passing through the through-hole 98 at least considerably reduced.

In the illustrated example, the lubricant supply system 36 is shown comprising one finger 84. However, in some examples, there may be a plurality of fingers 84. For example, there may be three fingers 84 disposed in equi-spaced relation about the inner periphery of the body member 86.

In the illustrated example, the lubricant collection passage 88 and the elongate channels 108, 109 may be annular channels. This simplifies installation since it is not necessary to fit the turbomolecular pump 10 in any particular rotational orientation in order to ensure that lubricant is able to return to the lubricant reservoir body.

The support elements 100 may be disposed at regular, relatively closely spaced intervals along the length of the elongate channel 108 to limit axial movement of the resilient bearing support 40.

The illustrated turbomolecular pumps have a rotor carrying shaft simply supported between two bearings (either mechanical or magnetic). Other turbomolecular pumps may have rotor shaft supported by bearings such that the rotor is cantilever supported. The bearings may be rolling bearings or a combination of rolling bearings and magnetic bearings as previously described. It is to be understood that the above described lubrication supply systems and deflectors may be applied to such turbomolecular pumps.

## Claims

1. A turbomolecular pump (10) comprising:
a housing (12);
a pumping mechanism (14) disposed in said housing, said pumping mechanism comprising a rotor shaft (24) having an axis of rotation (26);
a plurality of bearings (32, 34) supporting said rotor shaft for rotation relative to said housing about said axis of rotation, said plurality of bearings including a rolling bearing (32) supported by a resilient bearing support (40);
a lubricant supply system (36) that includes a lubricant collection passage (88); and
a lubricant transfer device (38) provided on said rotor shaft to transfer lubricant from said lubricant supply system to said rolling bearing,
wherein said housing comprises a face (96) disposed opposite an end face (56) of said resilient bearing support and said lubricant collection passage (88) is defined in said face to receive lubricant transferred to said rolling bearing that has passed through said rolling bearing and said resilient bearing support defines a lubricant through-passage (78) to receive said lubricant from said lubricant passage and conduct said received lubricant towards a lubricant reservoir (82(1), 82(2) 84); and **characterised in that** the pump further comprises a plurality of support elements (100) disposed in said lubricant collection passage, wherein said end face of said resilient bearing support (40) is disposed in abutting relation with said support elements.

2. A turbomolecular pump as claimed in claim 1, wherein said end face of said resilient bearing support is disposed in abutting relation with said face of said housing.

3. A turbomolecular pump as claimed in claim 1 or 2, wherein said lubricant collection passage comprises an annular channel (88) extending about and spaced apart from said rotor shaft.

4. A turbomolecular pump as claimed in any one of the preceding claims, further comprising a rotatable securing element (102) securing said resilient bearing support to said housing, wherein said rotatable securing element defines a flowpath to receive lubricant from said lubricant through-passage defined by said resilient bearing support and conduct said received lubricant towards said lubricant reservoir.

5. A turbomolecular pump as claimed in claim 4, wherein said rotatable securing element comprises external threading (104) configured to engage threading (106) provided on said housing.

6. A turbomolecular pump as claimed in Claim 4 or 5 wherein said rotatable securing element further comprises an elongate channel (108) provided in a face of the rotatable securing element (102) that bears against the resilient bearing support (40), an elongate channel (109) provided in the opposite face of the rotatable securing element; and a plurality of bores (110) connecting the two elongate channels (108, 109) and defining said flowpaths to receive lubricant from said lubricant through-passage.

7. A turbomolecular pump as claimed in any one of the preceding claims, wherein said resilient bearing support comprises a plurality of said lubricant through-passages and said lubricant through (78) passages define a plurality of flexible members configured to provide said resilient bearing support with a radial stiffness in the range 50 to 500 N/mm.

8. A turbomolecular pump as claimed in any one of the preceding claims wherein said housing comprises a wall having a through passage through which said rotor shaft extends, said wall is disposed between a chamber that houses said pumping mechanism and a chamber that houses said resilient bearing support, said rotor shaft comprises a taper portion (120) disposed between said wall and said rolling bearing and said taper portion increases in diameter towards said rolling bearing.

9. An installation comprising a turbomolecular pump as claimed in any one of the preceding claims, wherein said rotor shaft is inclined to the vertical by an angle between 10 and 90°.

10. An installation as claimed in claim 9, wherein said angle is between 45 and 90°.

## Patentansprüche

1. Turbomolekularpumpe (10), die Folgendes aufweist:
ein Gehäuse (12);
einen Pumpmechanismus (14), der in dem Gehäuse angeordnet ist, wobei der Pumpmechanismus eine Rotorwelle (24) mit einer Drehachse (26) aufweist;
eine Mehrzahl von Lagern (32, 34), die die Rotorwelle zur Drehung relativ zu dem Gehäuse um die Drehachse lagern, wobei die Mehrzahl von Lagern ein Wälzlager (32) umfasst, das von einem elastischen Lagerträger (40) getragen ist;
ein Schmiermittelzufuhrsystem (36), das einen Schmiermittelsammeldurchgang (88) aufweist; und
eine Schmiermitteltransfervorrichtung (38), die an der Rotorwelle vorgesehen ist, um Schmiermittel von dem Schmiermittelzufuhrsystem zu dem Wälzlager zu übertragen,
wobei das Gehäuse eine Fläche (96) aufweist, die gegenüber einer Endfläche (56) des elastischen Lagerträgers angeordnet ist, und der Schmiermittelsammeldurchgang (88) in der Fläche definiert ist, um Schmiermittel aufzunehmen, das zu dem Wälzlager übertragen wird und durch das Wälzlager hindurchgelangt ist, und der elastische Lagerträger einen Schmiermitteldurchgang (78) definiert, um das Schmiermittel aus dem Schmiermitteldurchgang aufzunehmen und das aufgenommene Schmiermittel zu einem Schmiermittelreservoir (82(1), 82(2), 84) zu leiten; und **dadurch gekennzeichnet, dass** die Pumpe ferner eine Mehrzahl von Stützelementen (100) aufweist, die in dem Schmiermittelsammeldurchgang angeordnet sind, wobei die Endfläche des elastischen Lagerträgers (40) in anliegender Beziehung zu den Stützelementen angeordnet ist.

2. Turbomolekularpumpe nach Anspruch 1, wobei die Endfläche des elastischen Lagerträgers in anliegender Beziehung zu der Fläche des Gehäuses angeordnet ist.

3. Turbomolekularpumpe nach Anspruch 1 oder 2, wobei der Schmiermittelsammeldurchgang einen ringförmigen Kanal (88) aufweist, der sich um die Rotorwelle herum erstreckt und von dieser beabstandet ist.

4. Turbomolekularpumpe nach einem der vorhergehenden Ansprüche, die ferner ein drehbares Befestigungselement (102) aufweist, das den elastischen Lagerträger an dem Gehäuse befestigt, wobei das drehbare Befestigungselement einen Strömungsweg definiert, um Schmiermittel aus dem Schmiermitteldurchgang aufzunehmen, der durch den elastischen Lagerträger definiert ist, und das aufgenommene Schmiermittel zu dem Schmiermittelreservoir zu leiten.

5. Turbomolekularpumpe nach Anspruch 4, wobei das drehbare Befestigungselement ein Außengewinde (104) aufweist, das so gestaltet ist, dass es in ein am Gehäuse vorgesehenes Gewinde (106) eingreift.

6. Turbomolekularpumpe nach Anspruch 4 oder 5, wobei das drehbare Befestigungselement ferner Folgendes aufweist: einen länglichen Kanal (108), der in einer Fläche des drehbaren Befestigungselements (102) vorgesehen ist, die an dem elastischen Lagerträger (40) anliegt, einen länglichen Kanal (109), der in der gegenüberliegenden Fläche des drehbaren Befestigungselements vorgesehen ist; und eine Mehrzahl von Bohrungen (110), die die beiden länglichen Kanäle (108, 109) verbinden und die Strömungswege zur Aufnahme von Schmiermittel aus dem Schmiermitteldurchgang definieren.

7. Turbomolekularpumpe nach einem der vorhergehenden Ansprüche, wobei der elastische Lagerträger eine Mehrzahl der Schmiermitteldurchgänge aufweist und die Schmiermitteldurchgänge (78) eine Mehrzahl von flexiblen Elementen definieren, die so konfiguriert sind, dass sie dem elastischen Lagerträger eine radiale Steifigkeit im Bereich von 50 bis 500 N/mm verleihen.

8. Turbomolekularpumpe nach einem der vorhergehenden Ansprüche, wobei das Gehäuse eine Wand mit einem Durchgang aufweist, durch den sich die Rotorwelle erstreckt, die Wand zwischen einer Kammer, in der der Pumpmechanismus untergebracht ist, und einer Kammer, in der der elastische Lagerträger untergebracht ist, angeordnet ist, die Rotorwelle einen sich verjüngenden Abschnitt (120) aufweist, der zwischen der Wand und dem Wälzlager angeordnet ist, und der Durchmesser des sich verjüngenden Abschnitts in Richtung des Wälzlagers zunimmt.

9. Anlage mit einer Turbomolekularpumpe nach einem der vorhergehenden Ansprüche, wobei die Rotorwelle gegenüber der Vertikalen um einen Winkel zwischen 10 und 90° geneigt ist.

10. Anlage nach Anspruch 9, wobei der Winkel zwischen 45 und 90° liegt.

## Revendications

1. Pompe turbomoléculaire (10) comprenant :
un boîtier (12) ;
un mécanisme de pompage (14) disposé dans ledit boîtier, ledit mécanisme de pompage comprenant un arbre de rotor (24) comportant un axe de rotation (26) ;
une pluralité de paliers (32, 34) supportant ledit arbre de rotor pour une rotation par rapport audit boîtier autour dudit axe de rotation, ladite pluralité de paliers incluant un palier à roulement (32) supporté par un support de palier élastique (40) ;
un système de fourniture de lubrifiant (36) qui inclut un passage de collecte de lubrifiant (88) ; et
un dispositif de transfert de lubrifiant (38) prévu sur ledit arbre de rotor pour transférer du lubrifiant dudit système de fourniture de lubrifiant audit palier à roulement,
dans laquelle ledit boîtier comprend une face (96) disposée à l'opposé d'une face d'extrémité (56) dudit support de palier élastique et ledit passage de collecte de lubrifiant (88) est défini dans ladite face pour recevoir un lubrifiant transféré audit palier à roulement qui a traversé ledit palier à roulement et ledit support de palier élastique définit un passage traversant de lubrifiant (78) pour recevoir ledit lubrifiant dudit passage de lubrifiant et conduire ledit lubrifiant reçu vers un réservoir de lubrifiant (82(1), 82(2), 84) ; et **caractérisé en ce que** la pompe comprend en outre une pluralité d'éléments de support (100) disposés dans ledit passage de collecte de lubrifiant, dans laquelle ladite face d'extrémité dudit support de palier élastique (40) est disposée dans une relation de butée avec lesdits éléments de support.

2. Pompe turbomoléculaire selon la revendication 1, dans laquelle ladite face d'extrémité dudit support de palier élastique est disposée dans une relation de butée avec ladite face dudit boîtier.

3. Pompe turbomoléculaire selon la revendication 1 ou 2, dans laquelle ledit passage de collecte de lubrifiant comprend un canal annulaire (88) s'étendant autour dudit arbre de rotor et espacé de celui-ci.

4. Pompe turbomoléculaire selon l'une quelconque des revendications précédentes, comprenant en outre un élément de fixation rotatif (102) fixant ledit support de palier élastique audit boîtier, dans laquelle ledit élément de fixation rotatif définit un trajet d'écoulement pour recevoir du lubrifiant dudit passage traversant de lubrifiant défini par ledit support de palier élastique et conduire ledit lubrifiant reçu vers ledit réservoir de lubrifiant.

5. Pompe turbomoléculaire selon la revendication 4, dans laquelle ledit élément de fixation rotatif comprend un filetage externe (104) configuré pour se mettre en prise avec un filetage (106) prévu sur ledit boîtier.

6. Pompe turbomoléculaire selon la revendication 4 ou 5, dans laquelle ledit élément de fixation rotatif comprend en outre un canal allongé (108) prévu dans une face de l'élément de fixation rotatif (102) qui s'appuie contre le support de palier élastique (40), un canal allongé (109) prévu dans la face opposée de l'élément de fixation rotatif ; et une pluralité d'alésages (110) reliant les deux canaux allongés (108, 109) et définissant lesdits trajets d'écoulement pour recevoir un lubrifiant dudit passage traversant de lubrifiant.

7. Pompe turbomoléculaire selon l'une quelconque des revendications précédentes, dans laquelle ledit support de palier élastique comprend une pluralité de passages traversants de lubrifiant et lesdits passages traversants de lubrifiant (78) définissent une pluralité d'organes souples configurés pour conférer audit support de palier élastique une rigidité radiale dans la plage de 50 à 500 N/mm.

8. Pompe turbomoléculaire selon l'une quelconque des revendications précédentes, dans laquelle ledit boîtier comprend une paroi comportant un passage traversant à travers lequel s'étend ledit arbre de rotor, ladite paroi est disposée entre une chambre qui héberge ledit mécanisme de pompage et une chambre qui héberge ledit support de palier élastique, ledit arbre de rotor comprend une partie conique (120) disposée entre ladite paroi et ledit palier à roulement et ladite partie conique présente un diamètre croissant vers ledit palier à roulement.

9. Installation comprenant une pompe turbomoléculaire selon l'une quelconque des revendications précédentes, dans laquelle ledit arbre de rotor est incliné à la verticale d'un angle entre 10 et 90°.

10. Installation selon la revendication 9, dans laquelle ledit angle est entre 45 et 90°.
